(19) Europäisches Patentamt / European Patent Office / Office européen des brevets

(11) **EP 3 533 370 B1**

(12) **EUROPEAN PATENT SPECIFICATION**

(45) Date of publication and mention
of the grant of the patent:
**11.09.2024 Bulletin 2024/37**

(21) Application number: **17865468.7**

(22) Date of filing: **31.10.2017**

(51) International Patent Classification (IPC):
*A47L 13/16* *(2006.01)*     *B32B 5/26* *(2006.01)*
*D04H 1/435* *(2012.01)*     *D04H 1/4374* *(2012.01)*

(52) Cooperative Patent Classification (CPC):
**D04H 1/435; A47L 13/16; B32B 3/30; B32B 5/02;
B32B 5/022; B32B 5/06; B32B 5/265; D04H 1/49;
D04H 1/498;** B32B 2250/03; B32B 2250/20;
B32B 2250/40; B32B 2262/0253; B32B 2262/0284;
B32B 2262/12;        (Cont.)

(86) International application number:
**PCT/JP2017/039306**

(87) International publication number:
**WO 2018/079825 (03.05.2018 Gazette 2018/18)**

(54) **DRY SHEET FOR CLEANING**

TROCKENBLATT ZUR REINIGUNG

FEUILLE SÈCHE POUR LE NETTOYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2016 JP 2016213895**

(43) Date of publication of application:
**04.09.2019 Bulletin 2019/36**

(73) Proprietor: **Daio Paper Corporation
Ehime 799-0492 (JP)**

(72) Inventor: **SHINTANI, Naoki
Shikokuchuo-shi
Ehime 799-0492 (JP)**

(74) Representative: **Meissner Bolte Partnerschaft
mbB
Patentanwälte Rechtsanwälte
Postfach 86 06 24
81633 München (DE)**

(56) References cited:
CN-A- 1 205 195      JP-A- 2003 039 585
JP-A- 2007 154 359    JP-A- 2008 188 853
JP-A- 2009 285 316    JP-A- 2014 129 632
JP-A- 2015 092 954    US-A1- 2014 366 294

**(Cont. next page)**

(52) Cooperative Patent Classification (CPC): (Cont.)
B32B 2307/73; B32B 2432/00

**Description**

Technical Field

The present invention relates to a dry sheet for cleaning.

Background Art

Conventionally, there has been known dry sheets for cleaning each formed as a fiber sheet formed by interlacing a resin net and fiber. Some of such dry sheets for cleaning have a front surface or a back surface which has been patterned in a bump and dent shape (for example, see Patent Document 1).

Patent Document 2 discloses a dry sheet for cleaning comprising multiple layers, comprising: fiber layers each arranged in a front surface layer and a back surface layer; a nonwoven fabric layer provided in an intermediate layer between the fiber layers; and an interlaced part in which the fiber layers are interlaced with the nonwoven fabric layer, wherein the interlaced part is provided in the front surface layer and the back surface layer and includes slightly interlaced parts and highly interlaced parts, each of the highly interlaced parts being formed in a dent shape and being interlaced so as to have a higher fiber density than each of the slightly interlaced parts, wherein the highly interlaced parts in the front surface layer are formed corresponding to and at almost same spots as the highly interlaced parts in the back surface layer, wherein the highly interlaced parts are formed in an area ratio of 20 to 90% with respect to an area of the front surface layer and the back surface layer in a plan view. Furthermore, Patent Document 2 discloses that the two outer layers are each individually produced using water-jet bonding. The laminate consisting of three layers is produced by means of thermal bonding.

Patent Document 3 also discloses as already explained in connection with patent document 2 a dry sheet for cleaning comprising multiple layers, namely two fiber sheet layers and one core layer. It is also described that each of the fiber sheets disclosed is water-jet bonded. The fiber sheets and the core layer are heat-bonded with an adhesive or sewn at bonding portions.

Citation List

Patent Literature

[Patent Document 1] Japanese Patent No. 3537775

[Patent Document 2] = CN 1 205 195 A

[Patent Document 3] = JP 2003 039585 A

Summary of Invention

Technical Problem

However, in forming the bump and dent shape of the respective dry sheets for cleaning described in Patent Document 1, the fiber of the entire sheet is interlaced in a state where the dry sheet is along the bump and dent shape. That is, in the bump and dent shape, the bump parts and the dent parts are formed on the respective front side and back side and combined with each other. Accordingly, the bump parts are also affected by the interlacing of the fiber. As a result, the density of the fiber forming the bumps and dents is substantially uniform in the entire sheet. In other words, the collection efficiency and collection characteristics of the entire sheet are substantially uniform, and there is a problem that the collection efficiency varies depending on the weight and size of the objects to be collected such as trash and dust.

An object of the present invention is to provide a dry sheet for cleaning which exhibit excellent collection efficiency regardless of the weight and shape of the objects to be collected.

Solution To Problem

In order to achieve the object, according to the invention according to claim 1, there is provided a dry sheet for cleaning includes:

fiber layers each arranged in a front surface layer and a back surface layer;
a spun bond nonwoven fabric layer provided in an intermediate layer between the fiber layers; and
an interlaced part in which the fiber layers are interlaced with the nonwoven fabric layer,
wherein the interlaced part is provided in the front surface layer and the back surface layer and includes slightly interlaced parts and highly interlaced parts, each of the highly interlaced parts being formed in a dent shape and being interlaced so as to have a higher fiber density than each of the slightly interlaced parts,
wherein the highly interlaced parts in the front surface layer are formed corresponding to and at almost same spots as the highly interlaced parts in the back surface layer,
wherein the front surface layer and the back surface layer each include polyethylene terephthalate fiber at a rate of 80% or more,
wherein a fiber diameter of the polyethylene terephthalate fiber is 3.3 dtex or more, wherein the highly interlaced parts are formed in an area ratio of 20 to 90% with respect to an area of the front surface layer and the back surface layer in a plan view, and
wherein the highly interlaced parts and the slightly interlaced parts each extend in a direction perpendicular to a wiping direction of the dry sheet for cleaning and are formed alternately and successively in the wiping direction.

According to the invention of claim 1, the dry sheet for cleaning has the highly interlaced parts in which fiber is interlaced in a density higher than in the slightly interlaced parts in the interlaced part in the front surface layer and the back surface layer. By constituting the fiber in the front surface layer and the back surface layer as described above, the dry sheet for cleaning has spots having different fiber densities in each of the front surface layer and the back surface layer.

Therefore, the dry sheet for cleaning exhibits different collection efficiencies and collection characteristics on the spots having different fiber densities, that is, at the highly interlaced parts and the slightly interlaced parts, so as to suitably collect the objects to be collected having different weights and sizes at the respective spots.

Therefore, the dry sheet for cleaning can be bulky and exhibit improved collection efficiency.

Furthermore, the highly interlaced parts in the front surface layer are formed corresponding to and at almost same spots as the highly interlaced parts in the back surface layer. When the highly interlaced parts are formed at different spots, it is not possible to obtain the assumed bulkiness, for example, since the water-jet interlacing is intended to be done only on one side, but is also done on the opposite side in practice. However, there is no such disadvantage according to the present invention. That is, since the spots hit by the water flow are to be the highly interlaced parts in both layers, unnecessary interlacing is not done at the slightly interlaced parts.

Furthermore, as the fiber diameter of the polyethylene terephthalate fiber constituting the hydrophobic fiber is 3.3 dtex or more, the rigidity (cushioning property) of the fiber improves, making it possible to handle the dry sheet with a little force. Moreover, polyethylene terephthalate fiber with a large fiber diameter of 3.3 dtex or more contributes to keeping inter-fiber voids so that the objects to be collected are suitably collected.

As the highly interlaced parts are formed in an area ratio of 20 to 90% to an area of the front surface layer and the back surface layer in a plan view, it is possible to suitably set the distribution and rate of the parts having different fiber densities.

As the highly interlaced parts and the slightly interlaced parts extend in a direction almost perpendicular to a wiping direction of the dry sheet for cleaning and are formed alternately and successively in the wiping direction, the dry sheet for cleaning can collect trash and/or dust at the parts with high fiber density and the parts with low fiber density alternately. Since various kinds of dust and dirt can be collected at each of the highly interlaced parts and the slightly interlaced parts, the dry sheet exhibits good collection efficiency.

Advantageous Effects Of Invention

The dry sheet for cleaning according to the present invention exhibits excellent collection efficiency regardless of the weight and shape of the objects to be collected.

Brief Description of Drawings

FIG. 1 is a schematic perspective view of the dry sheet for cleaning in an embodiment of the present invention.
FIG. 2A is a schematic cross-sectional view of the dry sheet for cleaning in an embodiment of the present invention.
FIG. 2B is a schematic cross-sectional view of the dry sheet for cleaning in an embodiment of the present invention.
FIG. 2C is a schematic cross-sectional view of the dry sheet for cleaning in an embodiment of the present invention.
FIG. 3 is a schematic perspective exploded view of the dry sheet for cleaning in an embodiment of the present invention.

FIG. 4 is a schematic drawing of a patterning of the dry sheet for cleaning in an embodiment of the present invention.

FIG. 5A is a schematic drawing showing a test method of Examples and Comparative Examples in the present invention.

FIG. 5B is a schematic drawing showing a test method of Examples and Comparative Examples in the present invention.

Description Of Embodiments

Hereinafter, the dry sheet for cleaning as an embodiment of the present invention is described in detail with reference to the drawings. However, the scope of the invention is not limited to the illustrated examples.

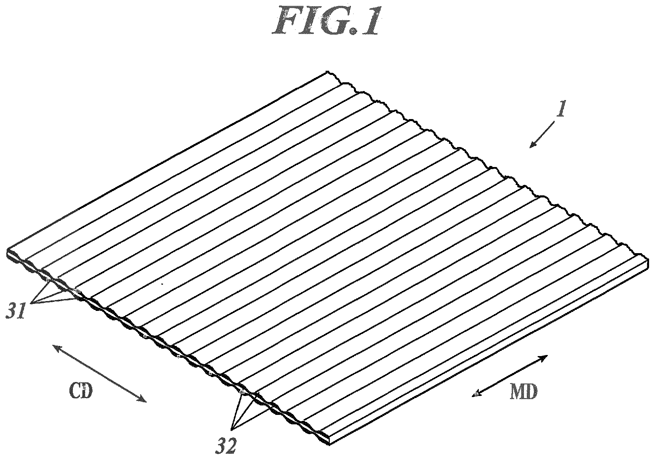

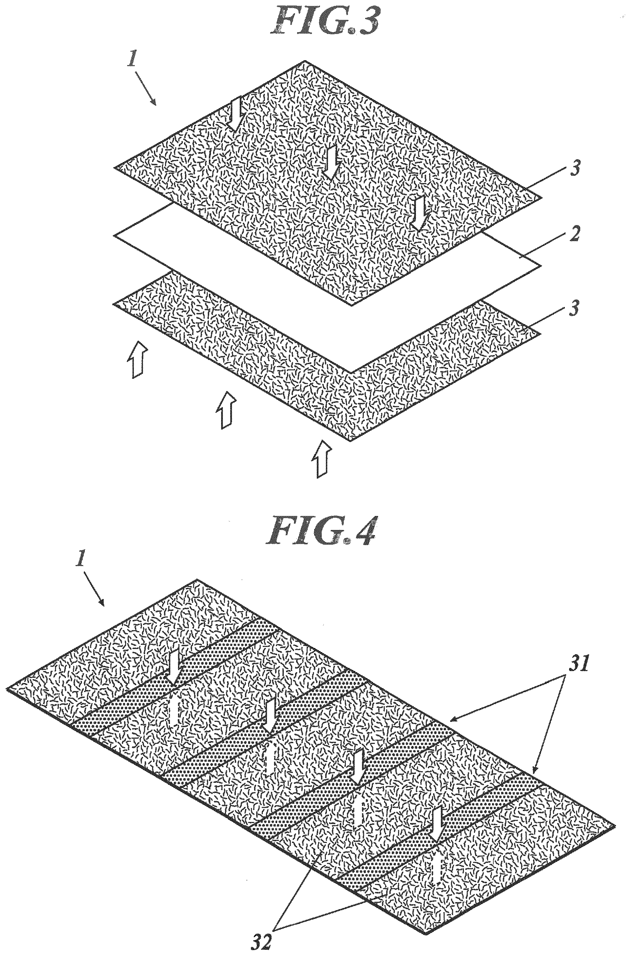

The dry sheet for cleaning in the embodiment of the present invention is described on the basis of FIGs. 1 to 4.

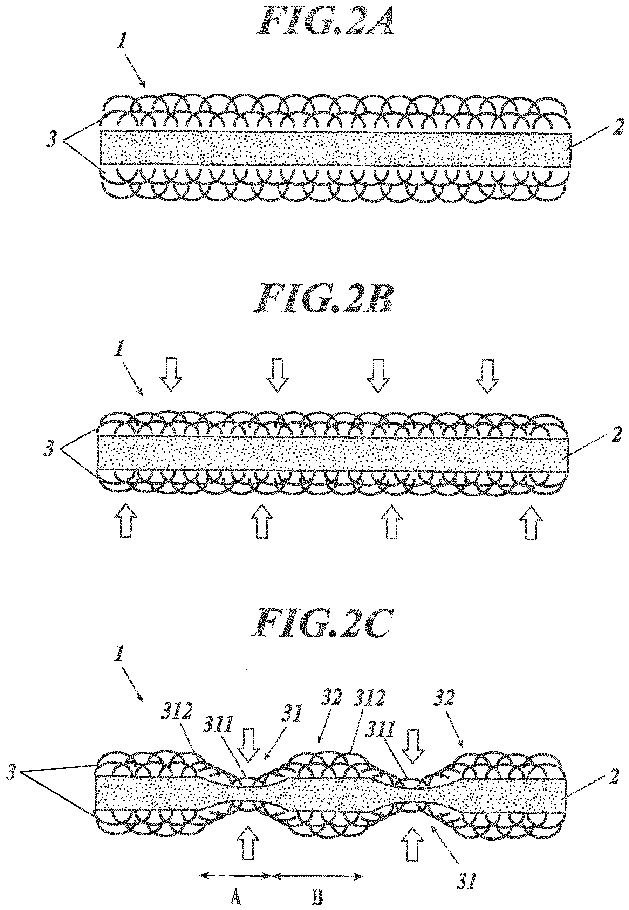

As shown in FIG. 2A, the dry sheet for cleaning 1 is provided with an inner layer 2 as a nonwoven fabric layer and outer layers 3 as fiber layers.

The inner layer 2 is an intermediate layer arranged between the outer layers 3 described later and formed of a nonwoven fabric. The inner layer 2 is preferably a spun bond nonwoven fabric from the viewpoint of durability. The durability is preferably 15 (N/5cm) or more in a wiping direction (CD direction) on the surface for cleaning and 35 (N/5cm) or more in a direction (MD direction) perpendicular to the CD direction. The grammage of the inner layer 2 is preferably set to be in the range of 13 to 20 g/m$^2$.

Natural fiber such as pulp, cotton, and hemp and cellulosic chemical fiber such as rayon and acetate may be used for the inner layer 2.

Here, in the dry sheet for cleaning, the wiping direction of the surface for cleaning is a direction perpendicular to the longitude direction of a predetermined tool to which the dry sheet for cleaning is attached. That is, it is a direction along the moving direction during cleaning.

As shown in FIG. 2B, the outer layers 3 form a front surface layer and a back surface layer of the dry sheet for cleaning 1 and are each mainly formed of hydrophobic fiber. Specifically, the weight ratio of the contained hydrophobic fiber to the total weight of the outer layers 3 is 50 to 99%.

Water is poured with a small water pressure of less than 20 kPa to the whole area of the outer layers 3 in pre-interlacing to combine the inner layer 2 and the outer layers 3, and after that, the first water-jet interlacing is done with a water pressure of 20 to 30 kPa. After that, the bump and dent shape is formed by second water-jet interlacing with a water pressure of 60 to 80 kPa for spot (s) to be patterned part (s) 31 described later.

Water hits the same spots on the front surface layer and the back surface layer from the both sides of the wet sheet for cleaning 1 in the water-jet interlacing. Accordingly, the patterned part 31 is formed such that the pattern of bump and dent shape on the front surface layer corresponds to that on the back surface layer at the same spots.

Chemical fiber mainly composed of polyethylene terephthalate, polypropylene, polyethylene, etc. are used as the outer layers 3.

The polyethylene terephthalate fiber is preferably included at a rate of 80% or more, and the fiber diameter is preferably 3.3 dtex or more.

With the fiber diameter of 3.3 dtex or more, the fiber has improved rigidity (cushioning property), and it is possible to handle the dry sheet with a little force. Moreover, polyethylene terephthalate fiber with a large fiber diameter of 3.3 dtex or more may contribute to keep inter-fiber voids so that the objects to be collected such as trash and dust are suitably collected.

As shown in FIG. 2C, the outer layers 3 each include the patterned part(s) 31 as highly interlaced part(s) and non-patterned part(s) 32 as slightly interlaced part(s).

The second water-jet interlacing is done on the outer layers 3 which have been combined by the first water-jet interlacing. The fiber after the second water-jet interlacing is entangled more than that only after the first water-jet interlacing such that the patterned part 31 is formed. Therefore, the fiber density of the patterned part 31 is higher than that of the non-patterned part 32. As a result, the patterned part 31 has a concaved shape deeper than the non-patterned part 32. That is, the patterned part 31 has a bottom 311 which is the bottom of the dent and an inclined part 312 which is an inclined surface connecting the non-interlaced part 32 described later and the bottom 311.

Further, in the second water-jet interlacing, the water-jet interlacing of the outer layers 3 (the front surface layer and the back surface layer) is done at the corresponding parts (at the same spots) from both surfaces. That is, the patterned parts 31 are formed at the corresponding parts (at the same spots) on the outer layers 3 (on the front surface layer and on the back surface layer). In other words, when water-jet interlacing is done only on the front surface layer or the back surface layer, the bulky fiber of the opposite surface layer may be also crushed and diminished in size even without water-jet being interlaced. However, there is no such disadvantage according to the present invention. Therefore, the high bulkiness of the dry sheet for cleaning 1 can be maintained.

The patterned parts 31 are extended along the direction (MD direction) perpendicular to the wiping direction (CD direction) when the dry sheet for cleaning 1 is used. The patterned parts 31 are formed in multiple rows separated from each other at predetermined intervals. An area ratio of these patterned parts 31 are 20 to 90% with respect to the surface area, in a plan view of the front surface or the back surface of the dry sheet for cleaning 1. Specifically, the area ratio is calculated using a unit length determined to be the width of one of the patterned parts 31 and a unit length determined to be the width of one of the non-patterned parts 32 in the CD direction. For example, if the width of the patterned part 31 is 3 mm and the width of the non-patterned part 32 is 12 mm, the area ratio is 20%. Here, the area ratio represents a ratio between the patterned surface A and the non-patterned surface B, where the patterned surface A is a surface area in a plan view of the patterned parts 31 and the non-patterned surface B is a surface area in a plan view of the non-patterned parts 32. The area ratio is calculated by the following formula.

$$\text{Area ratio \%} = A \,/\, A + B \times 100 \quad \cdots \text{(Formula 1)}$$

Preferably, the outer layers 3 each have a grammage of 20 to 25 $g/m^2$ and include two or more kinds of chemical fiber (synthetic fiber) in combination.

Since the non-patterned parts 32 are not subjected to the second water-jet interlacing, they are not affected by compression other than the fiber compression resulting from the pre-interlacing or the first water-jet interlacing, and have fiber density less than that of the pattered parts 31. In other words, in the non-patterned parts, fiber is easy to move freely. These non-patterned parts 32 mainly slide on the surface to be cleaned during wiping operation with the dry sheet for cleaning 1. That is, they may greatly contribute to the collection property of the dry sheet 1 for cleaning.

As described above, the dry sheet for cleaning 1 has the outer layers 3 as collection surfaces in which the patterned parts 31 with high fiber density and the non-patterned parts 32 with low fiber density are alternately arranged. In addition, the parts with high fiber density have high collection efficiency for heavy trash, and the parts with low fiber density have high collection efficiency for light trash.

Therefore, it is possible to collect both heavy trash and light trash with one dry sheet for cleaning 1. Furthermore, since the ratio between the patterned parts 31 and the non-patterned parts 32 is in the range of 20-80% according to the present invention, it is possible to preferably balance the collection efficiency of heavy trash with that of light trash.

According to the present embodiment, the dry sheet for cleaning 1 is provided with the patterned parts 31 having higher fiber density than the other parts in the front surface layer and the back surface layer. That is, the front surface layer or the back surface layer of the dry sheet for cleaning 1 have parts having different fiber densities.

Therefore, it is possible to suitably collect the objects to be collected having various weights and sizes at the respective parts having different fiber densities due to different collection efficiencies and collection characteristics.

Furthermore, the patterned parts 31 in the front surface layer are formed corresponding to and at almost same spots as the patterned parts 31 in the back surface layer. When the patterned parts 31 are formed at different spots, it is not possible to obtain the assumed bulkiness, for example, since the water-jet interlacing is intended to be done only on one side, but is also done on the opposite side in practice. However, there is no such disadvantage according to the present invention. That is, since the spots hit by the water flow are to be the patterned parts 31 on both surfaces, unnecessary interlacing is not done at the non-patterned parts 32.

Accordingly, the dry sheet for cleaning 1 can be bulky and exhibit improved collection efficiency.

According to the present embodiment, since the area ratio of the patterned parts 31 are 20 to 90% with respect to the front or back surface in a plan view, it is possible to suitably set the distribution and rate of the spots having different fiber densities and to achieve excellent collection efficiency for various kinds of trash.

According to the present embodiment, since the patterned parts 31 are extended along the direction perpendicular to the wiping direction, the dry sheet for cleaning 1 can collect trash and/or dust at the patterned parts 31 and the non-patterned parts 32 alternately. Since various kinds of dust and dirt can be collected at each of the patterned parts 31 and the non-patterned parts 32, the dry sheet exhibits good collection efficiency.

According to the present embodiment, since a spun bond nonwoven fabric is used as the inner layer 2, there is no disadvantage of damaging the surface to be cleaned by a resin net, which has been used conventionally.

According to the present embodiment, the patterned parts 31 and the non-patterned parts 32 are both formed by water-jet interlacing, specifically, respectively formed by pre-interlacing and by further interlacing for patterning. Thus, it is possible to manufacture the dry sheet for cleaning 1 easily.

In a case where the patterned parts 31 are formed by a heat roll or the like, for example, the non-patterned parts 32 are also pressed by the roll such that the fiber at the non-patterned parts 32 is also crushed. This results in smaller difference in fiber density and a reduced variety in collection efficiency. However, since only the patterned parts 31 are pressed by water with high pressure in the interlacing for patterning, there is no such disadvantage according to the present embodiment.

The present invention is not limited to the embodiment described above and modification examples, and it is natural that the specific configurations may be suitably modified.

EXAMPLES

[Example 1]

In the dry sheet for cleaning 1 of Example 1, the outer layers 3 were fibrous webs including polyethylene terephthalate as a main component and the inner layer 2 was a spun bond nonwoven fabric.
Chemical fiber mainly composed of polyethylene terephthalate, polypropylene, polyethylene, etc. was used as the hydrophobic fiber.
Specifically, the outer layers 3 were each composed of hydrophobic fiber by 100%, where polyethylene terephthalate was contained by 90% as the hydrophobic fiber and core-sheath fiber of polypropylene and polyethylene was contained by 10% as binder fiber. The polyethylene terephthalate fiber of 3.3 dtex in fineness and the binder fiber of 1.7 dtex in fineness were used.
The width of the respective patterned parts 31 formed on the outer layers 3 was 3 mm in the CD direction, and the width of the respective non-patterned parts 32 was 12 mm in the CD direction. That is, the area ratio of the patterned parts 31 to the surface area of the outer layers 3 in a plan view was 20%.

[Example 2]

Further, in the dry sheet for cleaning 1 of Example 2, the width of the respective patterned parts 31 formed on the outer layers 3 was 6 mm in the CD direction, and the width of the respective non-patterned parts 32 was 6 mm in the CD direction. That is, the area ratio of the patterned parts 31 to the surface area of the outer layers 3 in a plan view was 50%.

[Example 3]

In the dry sheet for cleaning 1 of Example 3, the width of the respective patterned parts 31 formed on the outer layers 3 was 12 mm in the CD direction, and the width of the respective non-patterned parts 32 was 3 mm in the CD direction. That is, the area ratio of the patterned parts 31 to the surface area of the outer layers 3 in a plan view was 80%.

[Example 4]

In the dry sheet for cleaning 1 of Example 4, the width of the respective patterned parts 31 formed on the outer layers 3 was 13 mm in the CD direction, and the width of the respective non-patterned parts 32 was 2 mm in the CD direction. That is, the area ratio of the patterned parts 31 to the surface area of the outer layers 3 in a plan view was 87%.

[Comparative Example 1]

In the dry sheet for cleaning 1 of Comparative Example 1, the width of the respective patterned parts 31 formed on the outer layers 3 was 15 mm in the CD direction, and the width of the respective non-patterned parts 32 was 0 mm in the CD direction. That is, the area ratio of the patterned parts 31 (strictly speaking, not the patterned parts 31 but a processed part where interlacing for patterning has been done in this Example) to the surface area of the outer layers 3 in a plan view was 100%.

[Comparative Example 2]

In the dry sheet for cleaning 1 of Comparative Example 2, the width of the respective patterned parts 31 formed on the outer layers 3 was 0 mm in the CD direction, and the width of the respective non-patterned parts 32 was 15 mm in the CD direction. That is, the area ratio of the patterned parts 31 to the surface area of the outer layers 3 in a plan view was 0%.

[Comparative Example 3]

In the dry sheet for cleaning 1 of the Comparative Example 3, the width of the patterned parts 31 formed on the outer layers 3 was 2 mm in the CD direction, and the width of the non-patterned parts 32 was 14 mm in the CD direction. That is, the area ratio of the patterned parts 31 to the surface area of the outer layers 3 in a plan view was 13%.

[Comparative Example 4]

The dry sheet for cleaning 1 of Comparative Example 4 had the outer layers 3 including fibers of the same kinds as but at different blend ratio from the fibers in the Examples, and evaluated.

That is, the outer layers 3 included PET of 3.3 dtex by 70% and binder fiber by 30%. the width of the respective patterned parts was 6 mm and the width of the respective non-patterned parts was 6 mm (patterning rate 50%), as well as in Example 2.

The test of floor wiping was executed using the dry sheets for cleaning 1 in Examples 1 to 3 and Comparative Examples 1 to 3 described above.

The test method involved attaching the dry sheet for cleaning 1 to a fixing tool of the dry sheet for cleaning 1 not described in the drawings and wiping the floor surface formed of an acryl board by sliding on it.

As for the fixing tool, a flat board member was attached to the tip of a stick member (grip), rotatable in all the directions. The dry sheet for cleaning 1 was attached to the flat board member.

A weight of 450 g was attached to the flat board member so that the pushing pressure between the dry sheet for cleaning 1 and the floor surface was constant.

As the test of the collection efficiency, some kinds of objects to be collected were placed on the surface to be wiped which was the floor surface made of an acryl board, and the amount of collected objects was measured.

In a wiping action, the dry sheet for cleaning 1 was moved by 25 cm from the center to the right, by 50 cm to the left, and by 25 cm to the right again, on the surface to be wiped of 50 cm in width to go and back a single time on the surface to be cleaned.

The test was executed for three kinds of objects to be collected, dust, sesame seed for heavy trash, and hair for light trash.

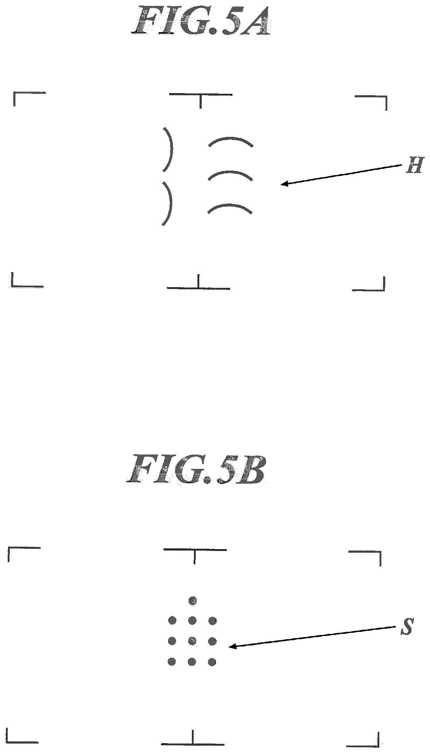

Specifically, hairs H were wiped as 3 hairs H were placed along the wiping direction and 2 hairs H were placed perpendicular to the wiping direction, as shown in FIGs. 5A and 5B. Sesame seeds were arranged in three rows which each include three, four, and three seeds in this order placed perpendicular to the wiping direction.

As for dust, JIS Z 8901 test powders 1 No. 7 (Kanto loam layer) which passed through a sieve of 200 mesh were obtained by 0.2 g and placed in a bordered area of 5 cm × 15 cm of the floor surface. Then, the amount of dust wiped off was checked visually and evaluation was made from A (dust was caught) to C (dust was not caught) was made.

The results of test and evaluation are shown in Table 1.

[TABLE 1]

| | Blended fiber | | Pattern | | | Collection Property | | |
|---|---|---|---|---|---|---|---|---|
| | | | Patterned Part (mm) | Non-patterned Part (mm) | Patterning Rate (%) | Heavy trash | Light Trash | Dust |
| Example 1 | PET<br>Binder fiber | 33dtex 90%,<br>1.7dtex 10% | 3 | 12 | 20 | Sesame seed<br>4/10 | Hair<br>5/5 | A |
| Example 2 | PET<br>Binder fiber | 33dtex 90%,<br>1.7dtex 10% | 6 | 6 | 50 | Sesame seed<br>5/10 | Hair<br>4/5 | A |
| Example 3 | PET<br>Binder fiber | 33dtex 90%,<br>1.7dtex 10% | 12 | 3 | 80 | Sesame seed<br>5/10 | Hair<br>4/5 | A |
| Example 4 | PET<br>Binder fiber | 33dtex 90%,<br>1.7dtex 10% | 13 | 2 | 87 | Sesame seed<br>5/10 | Hair<br>1/5 | A |

(continued)

| | Blended fiber | | Pattern | | | Collection Property | | |
|---|---|---|---|---|---|---|---|---|
| | | | Patterned Part (mm) | Non-patterned Part (mm) | Patterning Rate (%) | Heavy trash | Light Trash | Dust |
| Comparative Example 1 | PET | 33dtex 90%, | 15 | 0 | 100 | Sesame seed 6/10 | Hair 0/5 | C |
| | Binder fiber | 1.7dtex 10% | | | | | | |
| Comparative Example 2 | PET | 33dtex 90%, | 0 | 15 | 0 | Sesame seed 1/10 | Hair 5/5 | B |
| | Binder fiber | 1.7dtex 10% | | | | | | |
| Comparative Example 3 | PET | 33dtex 90%, | 2 | 14 | 13 | Sesame seed 1/10 | Hair 5/5 | A |
| | Binder fiber | 1.7dtex 10% | | | | | | |
| Comparative Example 4 | PET | 33dtex 70%, | 6 | 6 | 50 | Sesame seed 1/10 | Hair 1/5 | B |
| | Binder fiber | 1.7dtex 30% | | | | | | |

As shown in Table 1, in the results of Examples 1 to 4, four or five out of ten sesame seeds S for heavy trash could be collected and four or five out of five hairs H for light trash could be collected (except in Example 4). It could be observed that dust was collected well in any of the Examples. That is, it could be observed that Examples 1 to 4 exhibit good collection property and that Examples 1 to 3 in particular exhibit even more excellent collection property.

According to Comparative Example 1 where a patterning rate was 100%, collection efficiency of equal to or more than those according to Examples 1 to 3 could be exhibited as for sesame seeds S, for which five or six out of ten could be collected, however, collection efficiency could be hardly exhibited as for hairs H, for which zero or one out of five was collected.

According to Comparative Examples 2 and 3 where a patterning rate was 0%, collection efficiency could be hardly exhibited as for sesame seeds S, for which one out of ten was collected, however, good collection efficiency could be exhibited as for hairs H, for which five out of five was collected. Further, collection efficiency of dust was low according to Comparative Example 2, but it was good according to Comparative Example 3.

According to Comparative Example 4 where the blending ratio of PET fiber (3.3 dtex) is smaller than Examples by 20% and the patterning rate was 50%, collection efficiency could be hardly exhibited as for sesame seeds S, for which one out of ten was collected, or as for hairs H, for which one out of five was collected. Further, according to Comparative Example 4, collection efficiency for dust was also poor.

From the above, it was found that, if the patterning rate is 87% or more, good collection efficiency is exhibited as for heavy trash, but collection efficiency cannot be exhibited as for light trash.

Further, it was found that, if the patterning rate is 20% or less, good collection efficiency is exhibited as for light trash, but collection efficiency cannot be exhibited as for heavy trash.

Further, it was found that, if the patterning rate is within the range of 20-80%, good collection efficiency is exhibited as for both heavy trash and light trash.

Industrial Applicability

The present invention is suitably applicable for a dry sheet for cleaning.

Reference Signs List

1 : Dry Sheet For Cleaning

2 : Inner Layer (Nonwoven Fabric Layer)
3 : Outer Layer (Fiber Layer)
31 : Patterned Part (Highly Interlaced Part)
32 : Non-Patterned Part (Slightly Interlaced Part)
311 : Bottom
312 : Inclined Part
A : Patterned Surface
B : Non-Patterned Surface
H : Hair
S : Sesame Seed

**Claims**

1. A dry sheet (1) for cleaning comprising multiple layers (2; 3), comprising:

fiber layers (3) each arranged in a front surface layer and a back surface layer;
a spun bond nonwoven fabric layer (2) provided in an intermediate layer between the fiber layers; and
an interlaced part in which the fiber layers are interlaced with the nonwoven fabric layer,
wherein the interlaced part is provided in the front surface layer and the back surface layer (3) and includes
slightly interlaced parts (32) and highly interlaced parts (31), each of the highly interlaced parts (31) being formed
in a dent shape and being interlaced so as to have a higher fiber density than each of the slightly interlaced
parts (32),
wherein the highly interlaced parts (31) in the front surface layer are formed corresponding to and at almost
same spots as the highly interlaced parts (31) in the back surface layer,
**characterized in that** the front surface layer and the back surface layer (3) each include polyethylene terephthalate fiber at a rate of 80% or more,
wherein a fiber diameter of the polyethylene terephthalate fiber is 3.3 dtex or more,
wherein the highly interlaced parts (31) are formed in an area ratio of 20 to 90% with respect to an area of the
front surface layer and the back surface layer in a plan view, and
wherein the highly interlaced parts (31) and the slightly interlaced parts (32) each extend in a direction (MD)
perpendicular to a wiping direction (CD) of the dry sheet (1) for cleaning and are formed alternately and successively in the wiping direction (CD).

2. A method for manufacturing the dry sheet for cleaning according to claim 1, comprising,
by performing water-jet interlacing in which water flow hits a portion from a side of the front surface layer and from
a side of the back surface layer, forming the highly interlaced parts at the portion hit by the water flow on the front
surface layer and the back surface layer.

3. A method according to claim 2, wherein two water-jet interlacing, namely a first water-jet interlacing with a water
pressure of 20 to 30 kPa and a second water-jet interlacing with a water pressure of 60 to 80 kPa for spots of highly
interlaced parts 31, are done.

**Patentansprüche**

1. Trockenes Tuch (1) zum Reinigen, umfassend mehrere Schichten (2; 3), die Folgendes umfassen:

Faserschichten (3), die jeweils in einer vorderen Oberflächenschicht und einer hinteren Oberflächenschicht
angeordnet sind;
eine Spinnvliesstoffschicht (2), die in einer Zwischenschicht zwischen den Faserschichten vorgesehen ist; und
einen verflochtenen Teil, in dem die Faserschichten mit der Vliesstoffschicht verflochten sind,
wobei der verflochtene Teil in der vorderen Oberflächenschicht und der hinteren Oberflächenschicht (3) vorgesehen ist und wenig verflochtene Teile (32) und stark verflochtenen Teile (31) einschließt, wobei jeder der stark
verflochtenen Teile (31) in einer eingebuchteten Form gebildet ist und so verflochten ist, dass er eine höhere
Faserdichte als jeder der wenig verflochtenen Teile (32) aufweist,
wobei die stark verflochtenen Teile (31) in der vorderen Oberflächenschicht entsprechend und an fast denselben
Stellen wie die stark verflochtenen Teile (31) in der hinteren Oberflächenschicht ausgebildet sind,

**dadurch gekennzeichnet, dass**

die vordere Oberflächenschicht und die hintere Oberflächenschicht (3) jeweils Polyethylenterephthalatfasern mit einem Anteil von 80 % oder mehr einschließen, wobei ein Faserdurchmesser der Polyethylenterephthalatfaser 3,3 dtex oder mehr beträgt,

wobei die stark verflochtenen Teile (31) in einem Flächenverhältnis von 20 bis 90 % in Bezug auf eine Fläche der vorderen Oberflächenschicht und der hinteren Oberflächenschicht in einer Draufsicht gebildet sind, und wobei die stark verflochtenen Teile (31) und die wenig verflochtenen Teile (32) sich jeweils in einer Richtung (MD) senkrecht zu einer Wischrichtung (CD) des trockenen Tuchs (1) zum Reinigen erstrecken und abwechselnd und nacheinander in der Wischrichtung (CD) gebildet sind.

**2.** Verfahren zum Herstellen eines trockenen Tuchs zum Reinigen nach Anspruch 1, umfassend

durch Ausführen einer Wasserstrahlverflechtung, bei der ein Wasserstrom auf einen Abschnitt von einer Seite der vorderen Oberflächenschicht und von einer Seite der hinteren Oberflächenschicht auftrifft, Bilden der stark verflochtenen Teile an dem von dem Wasserstrom getroffenen Abschnitt auf der vorderen Oberflächenschicht und der hinteren Oberflächenschicht.

**3.** Verfahren nach Anspruch 2, wobei zwei Wasserstrahlverflechtungen, nämlich eine erste Wasserstrahlverflechtung mit einem Wasserdruck von 20 bis 30 kPa und eine zweite Wasserstrahlverflechtung mit einem Wasserdruck von 60 bis 80 kPa für Stellen mit stark verflochtenen Teilen 31 durchgeführt werden.

**Revendications**

**1.** Feuille sèche (1) pour nettoyer comprenant de multiples couches (2 ; 3), comprenant :

des couches (3) de fibres chacune agencée dans une couche de surface avant et une couche de surface arrière ;
une couche (2) de tissu non tissé filé lié fournie dans une couche intermédiaire entre les couches de fibres ; et une partie entrelacée dans laquelle les couches de fibres sont entrelacées avec la couche de tissu non tissé,
dans laquelle la partie entrelacée est fournie dans la couche de surface avant et la couche (3) de surface arrière et comporte des parties légèrement entrelacées (32) et des parties fortement entrelacées (31), chacune des parties fortement entrelacées (31) étant formée sous une forme de bosse et étant entrelacée de manière à avoir une densité de fibres supérieure à chacune des parties légèrement entrelacées (32),
dans laquelle les parties fortement entrelacées (31) dans la couche de surface avant sont formées en correspondance avec et à presque les mêmes emplacements que les parties fortement entrelacées (31) dans la couche de surface arrière,
**caractérisée en ce que**
la couche de surface avant et la couche (3) de surface arrière comportent chacune une fibre de polyéthylène téréphtalate à un taux de 80 % ou plus,
dans laquelle un diamètre de fibre de la fibre de polyéthylène téréphtalate est 3,3 dtex ou plus,
dans laquelle les parties fortement entrelacées (31) sont formées en un rapport de superficie de 20 à 90 % relativement à une superficie de la couche de surface avant et la couche de surface arrière dans une vue en plan, et
dans laquelle les parties fortement entrelacées (31) et les parties légèrement entrelacées (32) s'étendent chacune dans une direction (MD) perpendiculaire à une direction d'essuyage (CD) de la feuille sèche (1) pour nettoyer et sont formées alternativement et successivement dans la direction d'essuyage (CD).

**2.** Procédé pour fabriquer la feuille sèche pour nettoyer selon la revendication 1, comprenant,

en réalisant un entrelacement par jet d'eau dans lequel un écoulement d'eau frappe une portion depuis un côté de la couche de surface avant et depuis un côté de la couche de surface arrière, la formation des parties fortement entrelacées au niveau de la portion frappée par l'écoulement d'eau sur la couche de surface avant et la couche de surface arrière.

**3.** Procédé selon la revendication 2, dans lequel deux entrelacements par jet d'eau, à savoir un premier entrelacement par jet d'eau avec une pression d'eau de 20 à 30 kPa et un deuxième entrelacement par jet d'eau avec une pression d'eau de 60 à 80 kPa pour des emplacements de parties fortement entrelacées (31), sont faits.

# FIG.1

## *FIG.2A*

## *FIG.2B*

## *FIG.2C*

## *FIG.3*

## *FIG.4*

## FIG.5A

## FIG.5B

**EP 3 533 370 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3537775 B
- CN 1205195 A
- JP 2003039585 A